# EUROPEAN PATENT SPECIFICATION

(11) **EP 2 264 872 B1**
(45) Date of publication and mention of the grant of the patent: **10.01.2018**
(21) Application number: 09725981.6
(22) Date of filing: 22.01.2009
(51) Int. Cl.: H02K 13/00, H02K 1/17, H02K 5/04, H02K 5/14, H02K 11/00, H02K 23/00, H02K 23/04

(54) **DC MOTOR**
GLEICHSTROMMOTOR
MOTEUR À COURANT CONTINU

(30) Priority: 28.03.2008 JP 2008085290
(43) Date of publication of application: 22.12.2010
(73) Proprietor: Mabuchi Motor Co., Ltd., Matsudo-shi, Chiba 270-2280 (JP)
(72) Inventor: YOSHIDA, Taro, Matsudo City Chiba 270-2280 (JP); KODAMA, Takayuki, Abiko-shi Chiba 270-1178 (JP)
(74) Representative: Meissner Bolte Partnerschaft mbB
(86) International application number: PCT/JP2009/000230
(87) International publication number: WO 2009/118972

(56) References cited:
- EP-A2- 1 137 153
- JP-A- S60 204 243
- JP-A- 2001 268 856
- JP-A- 2003 164 130
- JP-A- 2007 202 275
- JP-A- 2007 228 750
- US-A1- 2007 200 444

## Description

### TECHNICAL FIELD

The present invention relates to a DC motor and more particularly to a motor having brushes for power feeding within a housing.

### BACKGROUND ART

A DC motor (hereinafter, also simply referred to as "motor") is used in all fields and applications ranging from electrical equipment for automobiles and the like, audio and video equipment to household electrical appliances, toys and models. As more electric equipment is used for automation, a larger number of motors are installed in a single product. This calls for size reduction without performance loss of individual motors. Conventionally, motors of round type in which the case is cylindrical, motors of flat type having the shape of an elongated old Japanese coin, or motors of square type having the shape of a rectangle are primarily used. A flat-type motor and a square-type motor are provided with two magnetized poles. Magnets are provided to extend in the longitudinal direction of the case so as to be opposite to each other. A round type is preferred with a motor with four or more poles to ensure well-balanced arrangement of magnetic poles and reduce the space for accommodating the magnets.

However, an extra space is created between magnets that are adjacent in the circumferential direction of a round-type motor. One of the requirements for maintaining the performance of a magnet is that the thickness of the magnetic pole at the center is secured. In this background, a technology is proposed whereby the case has a polygonal shape smaller than a cylindrical shape and the size is reduced by providing magnets such that the center of the magnetic pole is located at the corner of the polygon (see, for example, patent documents JP 2007-228750 and JP 2007-6688.

By employing the shape such as this, extra space between adjacent magnets is removed. While this reduces the size of the magnet itself, the necessary performance is maintained since a sufficient thickness is ensured at the center of the magnetic pole. In other words, size reduction is achieved without performance loss of the motor. Advantageously, there is no need to provide a rotation stopper when the motor is installed in a device because the case has a polygonal shape.

The document US 2007/200444 A1 discloses a DC motor comprising: a tubular housing having a plurality of flat lateral surfaces and flat or curved corners connecting adjacent lateral surfaces, the lateral surfaces forming a polygonal cross section; a magnet provided along the inner circumference of the housing and having magnetic poles at the corners of the housing; a shaft configured to be inserted into the housing along the axial line of the housing; an armature secured to the shaft and provided to face the magnet; a commutator fitted to the shaft so as to be coaxial with the armature; a brush having a columnar body and provided in the housing such that the longitudinal direction of the body being aligned with the radial direction of the commutator, the end surface of the brush being in sliding contact with the outer circumference of the commutator; a support provided in the housing and configured to support the brush in a manner that the stroke of the brush in the radial direction of the commutator is allowed; a biasing member provided in the housing and configured to bias the brush toward the commutator; the housing comprises a metal case and a raising brush holder connected together, the magnet being secured to the metal case and the brush holder supporting the brush, and the corner of the brush holder is provided with the tubular holder configured to support the brush such that the stroke of the brush in the radial direction or the commutator is allowed.

### DISCLOSURE OF THE INVENTION

### PROBLEM TO BE SOLVED BY THE INVENTION

Generally, a metal brush is used to feed power in a polygonal motor with a reduced size as described above. A metal brush used at a low current (e.g., 0.5A or lower), which is characteristically used in audio equipment, would perform with no problems. In applications using a high current (e.g., 1.0A or higher), which is characteristically used in electric equipment, or in applications using a high output (e.g., 100W or higher), which is characteristically used in power tools, there is an increased likelihood that the brush is burned relatively early due to spark produced at a contact.

The present invention has been developed to address the problem and a purpose thereof is to reduce the size of a DC motor provided with a power feeding brush and also to extend the life thereof.

### MEANS TO SOLVE THE PROBLEM

A DC motor according to at least one embodiment of the present invention comprises: a tubular housing having a plurality of flat lateral surfaces and a polygonal cross section; a magnet provided along the inner circumference of the housing and having magnetic poles at the corners of the housing; a shaft configured to be inserted into the housing along the axial line of the housing; an armature secured to the shaft and provided to face the magnet; a commutator fitted to the shaft so as to be coaxial with the armature; a carbon brush having a columnar body and provided in the housing such that the longitudinal direction of the body is aligned with the radial direction of the commutator, the end surface of the brush being in sliding contact with the outer circumference of the commutator; a support provided in the housing and configured to support the carbon brush in a manner that the stroke of the brush in the radial direction of the commutator is allowed; and a biasing member provided in the housing and configured to bias the carbon brush toward the commutator. The carbon brush is provided at a position along the circumference of the housing where the maximum length of the carbon brush is ensured. The axial line of the housing is aligned with the longitudinal direction of the inserted shaft.

The term "polygonal" may encompass polygons defined by a plurality of lateral surfaces of the housing. The joining sections (corner portions) that connect the lateral surfaces may be chamfered or curved (rounded). From the point of view of downsizing a DC motor (also simply referred to as "motor), it is desirable that the plurality of lateral surfaces form a regular polygon.

In this embodiment, the columnar carbon brush is biased in the longitudinal direction so as to be in sliding contact with the commutator. In other words, since a carbon brush is employed as a brush for feeding power to the armature, the motor can be used in high-current or high-output applications more successfully than in the case of using a metal brush. Since size reduction is achieved by providing magnetic poles at the corner portions of the housing in a manner that the maximum length of the carbon brush is ensured, the carbon brush can be used for a long period of time. Carbon brushes wear over time due to the sliding contact with the commutator, though less rapidly than metal brushes. In the inventive configuration the carbon brush is installed such that the maximum length thereof is ensured so that the long life of the motor is expected. Only two holders including a first carbon holder and a second carbon holder are provided, an angle formed by a direction of stroke of a first carbon brush supported by the first carbon holder and a direction of stroke of a second carbon brush supported by the second carbon holder being 90°.

### ADVANTAGE OF THE PRESENT INVENTION

According to the present invention, the purposes of reducing the size of a DC motor provided with a power feeding brush and extending the life thereof are achieved.

### BRIEF DESCRIPTION OF THE DRAWINGS

Fig. 1 is a front view of a DC motor according to the embodiment;
Fig. 2 is an exploded perspective view of the DC motor; and
Fig. 3 is a sagittal section A-A of Fig. 1;
Fig. 4 is a sagittal section B-B of Fig. 3;
Fig. 5 is a sagittal view of a brush holder assembly where a connector is fitted to the brush holder, taken in the direction denoted by C in Fig. 3;
Fig. 6 shows the holder of Fig. 5 with the printed board removed;
Fig. 7 is an exploded section of the brush holder assembly; and
Fig. 8 shows the holder of Fig. 6 in which the commutator is built in.

### DESCRIPTION OF THE REFERENCE NUMERALS

10 DC motor, 12 housing, 14 rotor, 16 metal case, 18 brush holder, 20 magnet, 22 shaft, 24 armature, 26 commutator, 28 magnet, 30 carbon brush, 31 carbon holder, 32 connector, 36 small case plate, 37 sliding bearing, 41 bearing, 42 bearing holder, 46 core, 48 winding, 50 bushing, 52 Hall device, 61 magnetic pole, 62 magnetic pole, 63 magnetic pole, 64 magnetic pole, 71 winding part, 72 one end, 73 other end, 76 choke coil, 78, circuit breaker, 80 printed board, 82 power feeding terminal, 84 output terminal

### BEST MODE FOR CARRYING OUT THE INVENTION

A DC motor comprises: a housing having a plurality of flat lateral surfaces and a polygonal cross section; a magnet provided along the inner circumference of the housing and having magnetic poles at the corners of the housing; a shaft configured to be inserted into the housing along the axial line of the housing; an armature secured to the shaft and provided to face the magnet; a commutator fitted to the shaft so as to be coaxial with the armature; a carbon brush having a columnar body and provided in the housing such that the longitudinal direction of the body is aligned with the radial direction of the commutator, the end surface of the brush being in sliding contact with the outer circumference of the commutator; a support provided in the housing and configured to support the carbon brush in a manner that the stroke of the brush in the radial direction of the commutator is allowed; and a biasing member provided in the housing and configured to bias the carbon brush toward the commutator. The carbon brush is provided at a position along the circumference of the housing where the maximum length of the carbon brush is ensured.

The biasing member is implemented by a spring comprising a main part configured to store a biasing force and a transmission part extending from the main part and configured to transmit the biasing force to the carbon brush. It is preferable that the main part is provided at a position in the housing outside a line extending from the range of stroke of the carbon brush. The configuration prevents the length of the carbon brush from being constrained by the space required for installation of the main part of the spring. Since the transmission part of the spring is in contact with the carbon brush, the biasing force maintains stable sliding contact between the carbon brush and the commutator, maintaining power fed to the commutator.

Specifically, the carbon brush may be provided to extend on a line connecting the corner of the housing and the center of the commutator, and the main part of the spring may be provided in a space between the corner and the lateral surface of the housing.

The spring may be implemented by a torsion spring. The winding of the torsion spring may form the main part and be provided near the lateral surface of the housing, and one end of the torsion spring may form the transmission part and be in contact with the carbon brush. For extended life of the carbon brush, one end of the torsion spring is preferably be in contact with the end of the carbon brush opposite to the end in sliding contact with the commutator. The end of a torsion spring is formed as a thin wire member and so facilitates the reduction of the space required for contact with the carbon brush. As such, a torsion spring is favorable in that the long life of the carbon brush is ensured. For example, springs other than a torsion spring (e.g., leaf spring) may be used.

The housing may be formed to have a polygonal shape comprising as many lateral surfaces as the number of magnetic poles, and flat or curved corners connecting adjacent lateral surfaces, and the magnet may be secured to the inner circumference of the housing such that the part of the magnet facing the corner is relatively thick and the part thereof facing the lateral surface is relatively thin. The center of the virtual circle formed by the inner circumference of the magnet is aligned with the center of the armature, and the magnetic poles may be formed around the thick portions. By shaping the housing such that the corner edges are cut, the appearance of the housing is optimized towards downsizing. Meanwhile, by ensuring the part of the magnet facing the corner is relatively thick and the part thereof facing the lateral surface is relatively thin, the motor performance is maintained.

When an armature has a circular cross section and the housing accommodating the armature has a polygonal cross section, a space is created at the corners of the housing. By providing the magnets using the space, downsizing of the housing, and, consequently, the motor as a whole is achieved. As a result of downsizing, only a limited space is available. To address this, the layout is designed so that the maximum length of the carbon brush is secured, as described above.

The housing may comprise a metal case and a resin brush holder connected together, the magnet being secured to the metal case and the brush holder supporting the carbon brush. The corner of the brush holder may be provided with a metal carbon holder configured to support the carbon brush such that the stroke of the brush in the radial direction of the commutator is allowed. By assembling the power feeder to the brush holder and configuring the assembly to be detachable from the magnet assembly, the job of building the carbon brush into the unit is made easy.

The motor may further comprise a detector magnet having an outer diameter equal to or smaller than the outer diameter of the commutator and secured to the shaft so as to be adjacent to the commutator; a magnetic detector configured to output a pulse signal in accordance with the rotation of the detector magnet; and a connector comprising a power feeding terminal connected to the wiring extending from the carbon brush, an output terminal from which a signal of the magnetic detector is retrieved, and a main part assembled to the magnetic detector. The connector may be detachably fitted to the brush holder, and the magnetic detector may be positioned such that the detector faces the detector magnet when the connector is fitted to the brush holder.

Since the connector is detachable from the brush holder, specification requirements can be addressed by only changing the connector (e.g., by changing the layout of a terminal) depending on the device to which the motor is fitted. Accordingly, the motor can be used in an increased variety of applications.

A detailed description will be given, with reference to the drawings, of the embodiments embodying the present invention.

### [Embodiment]

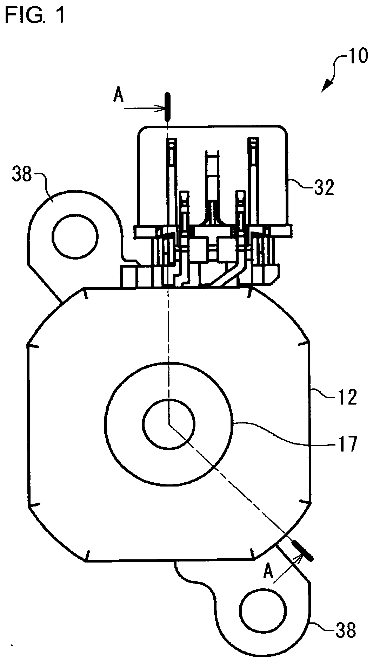

Fig. 1 is a front view of a DC motor according to the embodiment;

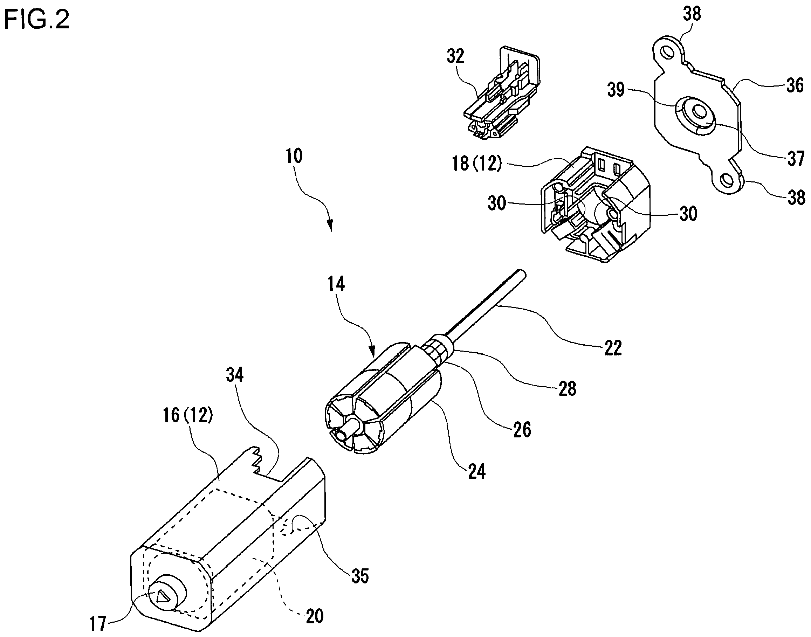

Fig. 2 is an exploded perspective view of the DC motor; and

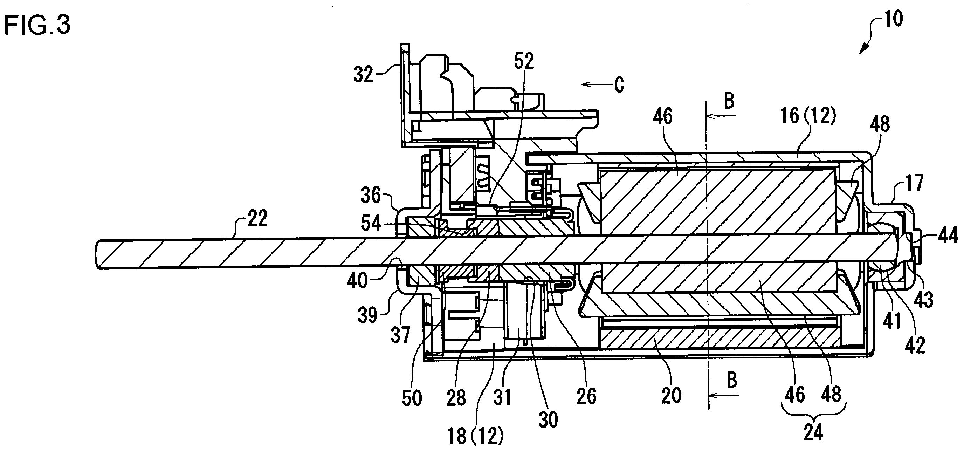

Fig. 3 is a sagittal section A-A of Fig. 1.

As shown in Figs. 1 and 2, a DC motor (hereinafter, simply referred to as "motor") 10 is configured such that a rotor 14 is accommodated in a tubular housing 12.

The housing 12 is configured as an assembly comprising a metal case 16 formed as a bottomed tube and a tubular brush holder 18 made of resin. The metal case 16 also functions as a yoke forming a magnetic circuit. A tubular field magnet (hereinafter, simply referred to as "magnet") 20 is secured to the inner circumference of the case 16. The case and the magnet form a stator. A boss 17 is formed at the center of the bottom of the metal case 16 so as to project outside slightly and accommodate a bearing described later.

The rotor 14 is configured by providing an armature 24, a commutator 26, a detector magnet 28, etc. are provided toward the first end of a shaft 22 (axis of rotation), extending substantially halfway along the shaft. The brush holder 18 is provided with a pair of carbon brushes 30 to face the commutator 26. A connector 32 for electrical connection with electrical equipment (not shown) is detachably attached to the brush holder 18.

A brush holder assembly comprising the brush holder 18 and the connector 32 attached thereto is fitted to the metal case 16 such that the brush holder 18 is inserted into the case 16. The lateral surface of the metal case 16 in the neighborhood of the open end of the case 16 is provided with notches 34 and 35. The brush holder assembly is properly positioned as it is fitted to the case 16 such that predetermined parts of the connector 32 and the brush holder 18 are latched by the respective base ends of the notches 34 and 35.

Once the brush holder assembly is fitted to the case, the open part of the metal case 16 is sealed by a small case plate 36. The small case plate 36 has substantially the same outer profile as the opening of the metal case 16 and is inserted through the opening for engagement. The small case plate 36 is secured to the metal case 16 such that the open end of the plate 36 inserted into the metal case 16 is squeezed inward. A pair of flanges 38 extending outward in opposite directions are provided at the periphery of the small case plate 36. Each flange 38 forms a mounter for electrical equipment.

A boss 39 is formed at the center of the small case plate 36 so as to project outside slightly. A ring-shaped sliding bearing 37 formed of an oilless metal impregnated with lubricant oil is press-fitted to the boss 39. An insertion hole coaxial with the sliding bearing 37 is provided on the bottom of the boss 39. Half of the shaft 22 toward the second end thereof is inserted through the insertion hole, is exposed outside, and is connected to the device to be driven via a gear, etc. (not shown). The sliding bearing 37 may be provided in the brush holder 18 instead of the small case plate 36. The structure of the embodiment, where the bearing is retained by the small metal case plate 36, however, allows the bearing to withstand temperature variation better than when the bearing is held by resin. Since the expansion and contraction of the volume of the bearing due to variation in the environment in which the motor is used (e.g., temperature and humidity) is small, the coaxiality of the shaft 22 is improved so that stable, highly precise rotation of the rotor 14 is maintained.

As shown in Fig. 3, the interior space of the housing 12 is defined by the metal case 16, the brush holder 18, and the connector 32. The sliding bearing 37 is press-fitted to the boss 39 of the small case plate 36. The boss 39 pivotally supports the part of the shaft 22 in the neighborhood of the insertion hole 40. A bearing holder 42, formed as a bottomed tube in which a ball-shaped sliding bearing 41 is coaxially inserted and engaged with the holder 42, is provided in the boss 17 of the metal case 16. The ball-shaped sliding bearing 41 is press-fitted to the first end of the shaft 22. A projection 43 with a triangular cross section is provided at the center of the bearing holder 42. By engaging the projection 43 with a recess 44 having the same shape and provided on the bottom of the boss 17, rotation of the holder 42 around the axial line is prevented. In other words, the structure for stopping the rotation of the bearing holder 42 is implemented by the projection 43 and the recess 44. The outer curved surface of the ball-shaped sliding bearing 41 is rotatable relative to the bearing holder 42. In other words, the axial line of the ball-shaped sliding bearing 41 coaxial with the shaft 22 is allowed to be inclined relative to the axial line of the bearing holder 42 by a predetermined angle. The bearing 41 is thus self-aligned due to the rotation of the shaft 22.

The armature 24 comprises a core 46 press-fitted to the shaft 22 and a winding 48 wound around the core 46. The outer circumference of the core 46 is provided to face the inner circumference of the magnet 20, maintaining a predetermined clearance (magnetic gap) therebetween. The magnetic configuration formed by the magnet 20 and the core 46 will be described later in detail.

Between the armature 24 and the sliding bearing 37 in the shaft 22 are provided the commutator 26, the detector magnet 28, and the bushing 50, as viewed from the armature 24. The commutator 26 is tubular and is press-fitted to the shaft 22 at a position facing the carbon brushes 30 when the connector 32 is built in the metal case 16. A tubular carbon holder 31 is secured to the brush holder 18. The carbon brush 30 is inserted in and supported by the carbon holder 31.

The detector magnet 28 is formed as a tube with an outer diameter smaller than that of the commutator 26. The shaft is inserted through the magnet 28 so that the magnet 28 is in contact with the commutator 26 in the axial direction. A Hall device 52 is provided underneath the connector 32. When the connector 32 is built in the metal case 16, the Hall device 52 is located to face the detector magnet 28. By configuring the detector magnet 28 to be slightly smaller than the commutator 26, the detector magnet 28 is prevented from interfering with the carbon brushes 30 when the second end of the shaft 22 is inserted into the brush holder 18. By maximizing the size of the detector magnet 28 within the constraints that it is smaller than the commutator 26, it is ensured that the magnet 28 is provided in the proximity of the Hall device 52.

The detector magnet 28 is magnetized to produce two poles such that N poles and S poles occur alternately along the outer circumference as the magnet 28 is rotated. The Hall device 52 detects polarity switching (boundary) associated with the rotation of the detector magnet 28. By acquiring the number of pulse signals for a predetermined period of time, the rotation of the motor 10 is detected. In this embodiment, it is assumed that the detector magnet 28 is magnetized to produce two poles. Alternatively, the magnet 28 may be magnetized to produce four poles or other even number of poles.

A recess 54 having a rectangular cross section is provided in the surface of the detector magnet 28 facing the bushing 50. The bushing 50 is formed as a stepped column having an outer shape complementary with the recess 54. The bushing 50 is press-fitted to the shaft 22 so that the end thereof is engaged with the recess 54. As a result, rotation of the detector magnet 28 relative to the shaft 22 is prevented. The bush 50 is formed of a magnetic material such as iron and also functions as a back yoke that stabilizes the magnetic power of the detector magnet 28.

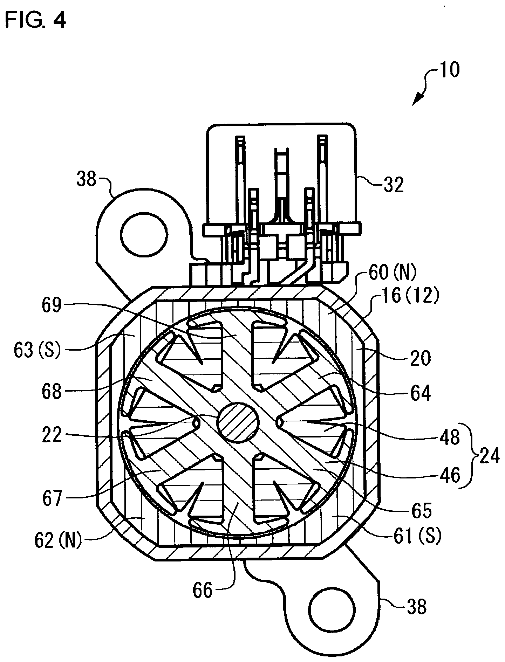

Fig. 4 is a sagittal section B-B of Fig. 3. The metal case 16 has four flat lateral surfaces and a rectangular cross section. Adjacent lateral surfaces are joined via a curved (R-shaped) corner portion. By chamfering the corners of the rectangular shape, the overall size of the motor 10 is reduced. The outer circumference of the magnet 20 is adhesively secured to the inner circumference of the metal case 16. It is ensured that those portions of the magnet 20 corresponding to the corner portions of the metal case 16 are thick and those portions corresponding to the lateral surfaces are thin. The center of the virtual circle formed by the inner circumference of the magnet 20 is located on the axis of the armature 24. The magnetic poles are primarily formed around the thick portions of the magnet 20.

In other words, the magnet 20 is formed as a tubular body with eccentric thickness and produce circularly polarized magnetic fields using four poles including a magnetic pole 60 (N pole), a magnetic pole 61 (S pole), a magnetic pole 62 (N pole), and a magnetic pole 63 (S pole) provided equidistant in the circumferential direction. The center of each magnetic pole, which is thick, is located at a corresponding one of the four corner portions of the metal case 16. The magnet 20 may be formed by integrally molding a magnetic material into a tube of eccentric thickness, securing the material to the metal case 16, and magnetizing the material from outside using a magnetic field generator. The magnetizing technology is publicly known so that a detailed description thereof is omitted.

The core 46 comprises six magnetic poles 64-69 radially extending from the central tubular portion press-fitted to the shaft 22. A winding 48 is wound around each magnetic pole. The area between the core 46 and the winding 48 is coated with a coating power for insulation.

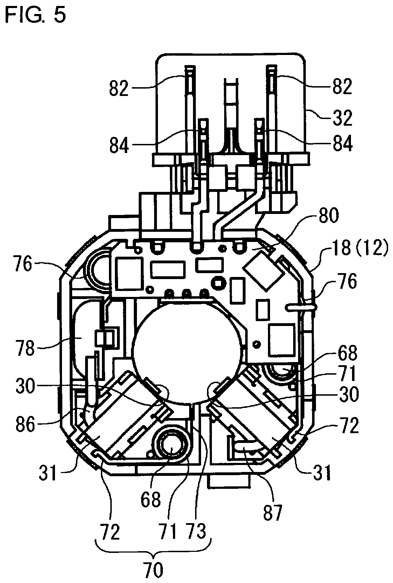

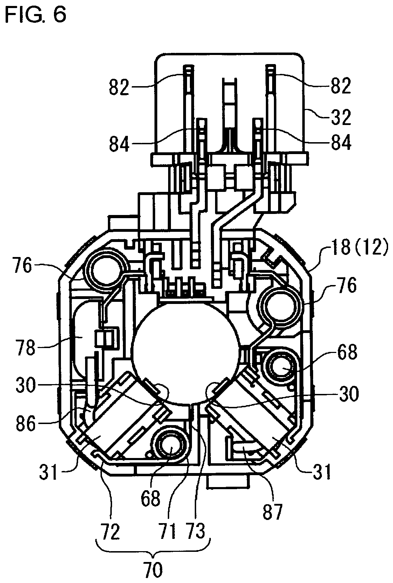

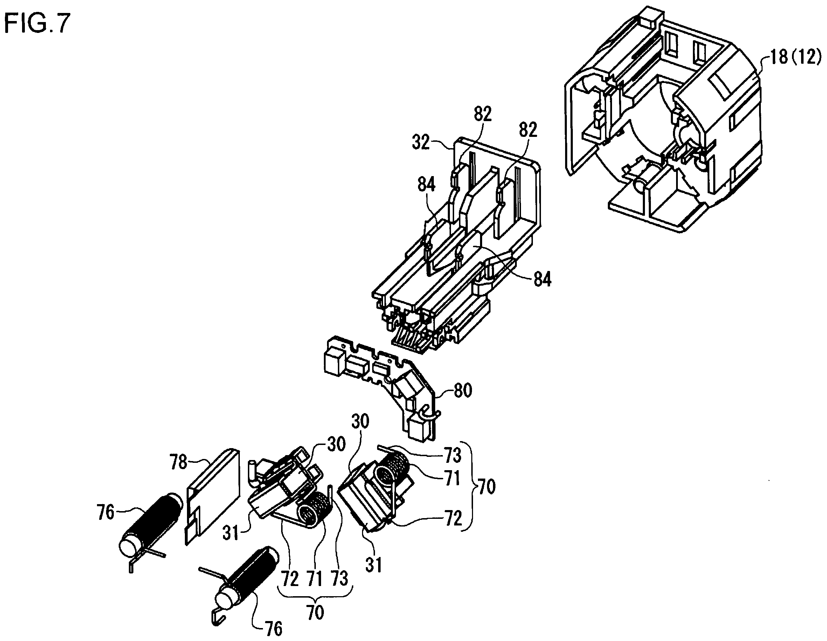

Fig. 5 is a sagittal view of a brush holder assembly where a connector is fitted to the brush holder, taken in the direction denoted by C in Fig. 3. Fig. 6 shows the holder of Fig. 5 with the printed board removed. Fig. 7 is an exploded section of the brush holder assembly.

As shown in Figs. 5 and 6, the brush holder 18 is formed as a bottomed tube. Like the metal case 16, the corner portions of the rectangular cross section are curved. A circular hole that allows insertion of the commutator 26 and the detector magnet 28 in the axial direction are formed at the center of the brush holder 18. Functional components are optimally arranged around the hole so as to use the space efficiently. The axial direction of the brush holder 18 is aligned with the lengthwise direction of the shaft 22 inserted through the brush holder 18.

In other words, a pair of tubular carbon holders 31 are secured to the lower left and lower right corner portions shown in Fig. 5 of the brush holder 18 at an angle of 90° in the circumferential direction. The carbon brushes 30 are slidably accommodated in the holder 18. The carbon holder 31 comprises an elongated tubular body formed of a conductive material and having a rectangular cross section. The carbon holder 31 is provided to extend in the radial direction of the brush holder 18.

The carbon brush 30 is formed as an elongated column having a rectangular cross section, slidably inserted into the carbon holder 31, and is supported thereby. With this, the carbon brush 30 is located to extend on a line connecting the corner of the brush holder 18 with the center of the commutator 26 when the metal case 16, the rotor 14, and the brush holder assembly are assembled. That the brush 30 extends on a line connecting the center and the corner means that the brush 30 is located on a diagonal line of the square defined by connecting the flat portions of the brush holder 18. In other words, the brush 30 is located at a position along the circumference of the brush holder 18 where the space extending in the radial direction is the largest. For this reason, the carbon brush 30 is located at a position where the maximum length of the brush 30 is secured.

A torsion spring 70 is provided in a space between the corner portion of the brush holder 18 and the lateral surface. A winding 71 of the torsion spring 70 is supported by a boss 68 provided in the neighborhood of the lateral surface of the brush holder 18 such that the boss 68 is inserted in the winding. The first end 72 extending from the winding 71 is brought into contact with the rear end surface of the carbon brush 30. The second end 73 extending from the winding 71 is secured to the bottom of the brush holder 18. The winding 71 of the torsion spring 70 stores a biasing force. The first end 72 transmits the biasing force to the carbon brush 30, biasing the brush 30 toward the commutator 26.

The surface of carbon holder 31 facing the torsion spring 70 is provided with a slit (not shown) extending along the direction of stroke of the carbon brush 30. This allows the first end 72 of the torsion spring 70 to be displaced due to the slit even when the carbon brush 30 is displaced toward the commutator 26, ensuring that a biasing force is always applied to the carbon brush 30. In other words, even if the carbon brush 30 wears and is reduced in size with time, stable contact with the commutator 26 is maintained. Meanwhile, by providing the winding 71 of the torsion spring 70 outside the line extending from the range of stroke of the carbon brush 30, the carbon brush 30 with the maximum allowable size can be selected so that the long life of the carbon brush 30, and, consequently, the motor 10 is expected.

Two choke coils 76, a circuit breaker 78, a printed board 80, etc. are further provided in the interior space of the brush holder 18. The choke coils 76 are for eliminating electrical noise and are located at the top left and top right corners of the space as illustrated. As shown also in Fig. 7, by locating each of the choke coils 76 such that the axial line thereof is parallel with the axial line of the brush holder 18, the cross sectional space of the brush holder 18 is saved and the downsizing of the holder is achieved. The circuit breaker 78 is formed of a publicly known material such as bimetal. The breaker 78 detects an excess current in the excitation circuit or excess temperature rise in the neighborhood and breaks the circuit accordingly.

The printed board 80 has an L shape extending in the top part and the top right space of the brush holder 18. The board 80 is fitted in the brush holder 18 to cover the pair of choke coils 76 from front. Circuit devices such as a capacitor for cutting electrical noise, a diode for circuit protection, and a resistor for the Hall device 52 are mounted on the printed board 80. The configuration described above prevents the choke coil 76 from coming into contact with the armature 24 even if the choke coil 76 is detached from its place.

The connector 32 is a direct connector to directly connect the motor 10 to the electric equipment that should be driven. The connector 32 comprises a pair of power feeding terminals 82 and a pair of output terminals 84 for retrieving a signal from the Hall device 52, which are assembled in a unit. In addition to the Hall device 52, a film capacitor for cutting electrical noise is provided underneath the connector 32.

One of the power feeding terminals 82 is electrically connected to one of the carbon brushes 30 via the pair of choke coils 76, the circuit breaker 78, and a pigtail line 86. The other of the power feeding terminals 82 is electrically connected to the other carbon brush via the printed board 80, the other choke coil 76, and a pigtail line 87. Electrical connection on the printed board 80 is parallel electrical connection.

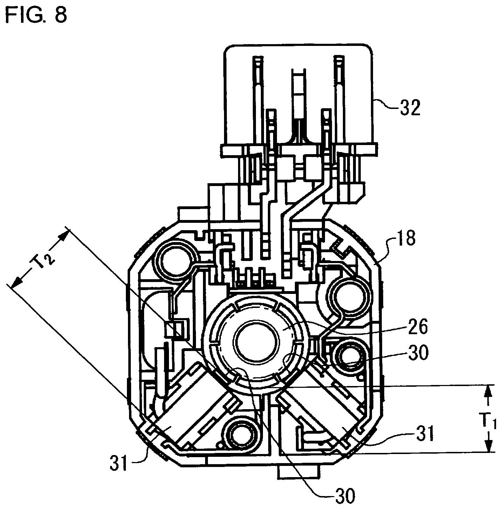

Fig. 8 shows how the commutator is built in the configuration shown in Fig. 6.

As illustrated, the direct distance T1 between the outer circumference of the commutator 26 and the flat part of the brush holder 18 is smaller than the maximum length (i.e., the initial length) T2 of the carbon brush 30 (T1<T2). In other words, since the axial line of the carbon brush 30 is located on the diagonal line of the brush holder 18 as described above, the maximum length of the carbon brush 30 is secured. The maximum length of the carbon brush 30 as illustrated is equal to the sum of the length of the carbon brush 30 inserted into the entirety of the carbon holder 31 and the length of the carbon brush 30 projecting from the carbon holder 31.

A DC motor, if it is of a large size, can accommodate long carbon brushes, irrespective of the location in the brush holder. As a result, the long life of the carbon brushes can be ensured. However, as the DC motor is downsized, the carbon brush may have to be shortened depending on the location in the brush holder. According to the embodiment, a configuration is effectively implemented in which carbon brushes can have a length T2 instead of T1, which may not satisfactory offer long life in a small-sized DC motor.

The embodiment described above is intended to be illustrative only and it will be obvious to those skilled in the art that various modifications to the embodiment such as design variations could be developed based upon the knowledge of a skilled person and that such modifications are also within the scope of the present invention.

In the embodiment described above, the housing 12 (the metal case 16 and the brush holder 18) of the motor 10 is formed to have a rectangular shape having four flat surfaces and curved at the corners, by way of example. In a variation, a housing having a polygonal shape (e.g., octagonal shape) may be employed. The corners may be chamfered (curved or flattened) or not chamfered.

In the embodiment described above, the carbon brush 30 is columnar in shape, by way of example. Alternatively, the brush 30 may have the shape of a cylinder or an elongated post. In such cases, the shape of the carbon holder, which supports the carbon brush, is designed to conform to the shape of the brush.

In the embodiment described above, the four magnets 20 are formed by integral molding, by way of example. In a variation, four individual magnets each provided with a thick part and a thin part are prepared and secured to the four corners of the metal case 16 respectively. In other words, the magnet 20 may be split into respective magnetic poles at the boundaries (thin parts) between adjacent thin magnetic poles.

In the embodiment described, a printed board 80 having circuit protection devices mounted thereon is provided in the brush holder 18. Depending on the usage, the motor according to a variation may have a simple configuration in which the printed board and the mounted circuit are omitted. For example, the power feeding terminals 82 as illustrated in Fig. 6 may be directly connected to the choke coils 76 via a lead.

## Claims

1. A DC motor (10) comprising:
a tubular housing (12) having a plurality of flat lateral surfaces and flat or curved corners connecting adjacent lateral surfaces, the lateral surfaces forming a polygonal cross section;
a magnet (20) provided along the inner circumference of the housing (12) and having magnetic poles (60, 61, 62, 63) at the corners of the housing (12);
a shaft (22) configured to be inserted into the housing (12) along the axial line of the housing (12);
an armature (24) secured to the shaft (22) and provided to face the magnet (20);
a commutator (26) fitted to the shaft (22) so as to be coaxial with the armature (24);
a carbon brush (30) having a columnar body and provided in the housing (12) such that the longitudinal direction of the body being aligned with the radial direction of the commutator (26), the end surface of the brush (30) being in sliding contact with the outer circumference of the commutator (26);
a support (31) provided in the housing (12) and configured to support the carbon brush (30) in a manner that the stroke of the brush (30) in the radial direction of the commutator (26) is allowed; and
a biasing member (70) provided in the housing (12) and configured to bias the carbon brush (30) toward the commutator (26),
wherein the carbon brush (30) is provided such that longitudinal direction of the brush (30) is aligned with the diagonal line of the polygon,
the housing (12) comprises a metal case (16) and a resin brush holder (18) connected together, the magnet (20) being secured to the metal case (16) and the brush holder (18) supporting the carbon brush (30),
and
the corner of the brush holder (18) is provided with a tubular carbon holder (31) configured to support the carbon brush (30) such that the stroke of the brush in the radial direction of the commutator (26) is allowed, and
the carbon holder (31) includes only two holders including a first carbon holder (31) and a second carbon holder (31), an angle formed by a direction of stroke of a first carbon brush (30) supported by the first carbon holder (31) and a direction of stroke of a second carbon brush (30) supported by the second carbon holder (31) being 90°.

2. The DC motor (10) according to claim 1,
wherein the biasing member (70) is implemented by a spring (70) comprising a main part (71) configured to store a biasing force and a transmission part (72) extending from the main part (71) and configured to transmit the biasing force to the carbon brush (30), and the main part (71) is provided at a position in the housing (12) outside a line extending from the range of stroke of the carbon brush (30).

3. The DC motor (10) according to claim 2,
wherein the carbon brush (30) is provided to extend on a line connecting the corner of the housing (12) and the center of the commutator (26), and
the main part (71) of the spring (70) is provided in a space between the corner and the lateral surface of the housing (12).

4. The DC motor (10) according to claim 2,
wherein the spring (70) is implemented by a torsion spring, and the winding of the torsion spring forms the main part (71) and is provided near the lateral surface of the housing (12), and one end of the torsion spring forms the transmission part (72) and is in contact with the carbon brush (30).

5. The DC motor (10) according to claim 1,
wherein the housing (12) is formed to have a polygonal shape comprising as many lateral surfaces as the number of magnetic poles (60, 61, 62, 63), and flat or curved corners connecting adjacent lateral surfaces, and
the magnet (20) is secured to the inner circumference of the housing (12) such that the part of the magnet (20) facing the corner is relatively thick and the part thereof facing the lateral surface is relatively thin, the center of the virtual circle formed by the inner circumference of the magnet (20) is aligned with the center of the armature (24), and the magnetic poles (60, 61, 62, 63) are formed around the thick portions.

6. The DC motor (10) according to claim 1,
wherein the carbon holder (31) is made of metal.

7. The DC motor (10) according to claim 6, further comprising:
a detector magnet (28) having an outer diameter equal to or smaller than the outer diameter of the commutator (26) and secured to the shaft (22) so as to be adjacent to the commutator (26);
a magnetic detector (52) configured to output a pulse signal in accordance with the rotation of the detector magnet (28); and
a connector (32) comprising a power feeding terminal (82) connected to the wiring extending from the carbon brush (30), an output terminal (84) from which a signal of the magnetic detector (52) is retrieved, and a main part assembled to the magnetic detector (52) and detachably fitted to the brush holder (18), and the magnetic detector (52) being positioned such that the detector faces the detector magnet (28) when the main part is fitted to the brush holder (18).

8. The DC motor (10) according to claim 1,
wherein the direct distance between the outer circumference of the commutator (26) and the flat lateral surface of the housing (12) is smaller than the maximum length of the carbon brush (30).

9. The DC motor (10) according to claim 1,
wherein the housing (12) has a rectangular cross section having four flat lateral surfaces.

10. The DC motor (10) according to claim 9,
wherein only two carbon holders (31) are provided, and the carbon holders (31) are provided in the brush holder (18) such that the axial line of one of the carbon holders (31) is at an angle of 90·with respect to the axial line of the other.

11. The DC motor (10) according to claim 10,
wherein two choke coils (76) as devices for eliminating electrical noise are provided in an interior space of the brush holder (18), and each of the two choke coils (76) is provided in a space opposite, with respect to the shaft (22), to the space where the corresponding one of the carbon holders (31) is provided.

12. The DC motor (10) according to claim 11,
a printed board (80) with a circuit device connected to a power feeding terminal (82) mounted thereon is provided in the interior space of the brush holder (18), and
the printed board (80) is fitted in the brush holder (18) so as to cover the choke coils (76) from the armature (24) side.

## Patentansprüche

1. Gleichstrommotor (10), umfassend:
ein röhrenförmiges Gehäuse (12) mit einer Vielzahl flacher Seitenflächen und flacher oder gebogener Ecken, die benachbarte Seitenflächen verbinden, wobei die Seitenflächen einen vieleckigen Querschnitt bilden;
einen Magneten (20) entlang des Innenumfangs des Gehäuses (12) mit Magnetpolen (60, 61, 62, 63) an den Ecken des Gehäuses (12);
eine Welle (22), die so gestaltet ist, dass sie entlang einer Axiallinie des Gehäuses (12) in das Gehäuse (12) eingeführt werden kann;
einen Anker (24), der an der Welle (22) befestigt und bereitgestellt ist, um dem Magneten (20) gegenüberzustehen;
einen Kollektor (26), der so an der Welle (22) angebracht ist, dass er koaxial zum Anker (24) verläuft;
eine Kohlebürste (30), die einen säulenförmigen Körper aufweist und im Gehäuse (12) so bereitgestellt ist, dass die Längsrichtung des Körpers mit der Radialrichtung des Kollektors (26) ausgerichtet ist, wobei die Endfläche der Bürste (30) im Gleitkontakt mit dem Außenumfang des Kollektors (26) steht;
eine Halterung (31), die im Gehäuse (12) bereitgestellt und so gestaltet ist, dass sie die Kohlebürste (30) in einer Weise hält, dass der Strich der Bürste (30) in Radialrichtung des Kollektors (26) möglich ist; und
ein Vorspannelement (70), das im Gehäuse (12) bereitgestellt und so gestaltet ist, dass die Kohlebürste (30) in Richtung des Kollektors (26) vorgespannt wird,
wobei die Kohlebürste (30) so bereitgestellt ist, dass die Längsrichtung der Bürste (30) mit der Diagonallinie des Vielecks ausgerichtet ist,
das Gehäuse (12) ein Metallgehäuse (16) und einen Harzbüstenhalter (18) umfasst, die miteinander verbunden sind, wobei der Magnet (20) am Metallgehäuse (16) befestigt ist und der Bürstenhalter (18) die Kohlebürste (30) hält, und
die Ecke des Bürstenhalters (18) mit einem röhrenförmigen Kohlehalter (31) bereitgestellt ist, der so gestaltet ist, dass er die Kohlebürste (30) so hält, dass der Strich der Bürste in Radialrichtung des Kollektors (26) ermöglicht wird, und
der Kohlehalter (31) nur zwei Halterungen einschließlich eines ersten Kohlehalters (31) und eines zweiten Kohlehalters (31) aufweist, und ein Winkel, der durch eine Richtung des Strichs einer durch den ersten Kohlehalter (31) gehaltenen ersten Kohlebürste (30) und eine Richtung einer durch den zweiten Kohlehalter (31) gehaltenen zweiten Kohlebürste (30) gebildet wird, 90° beträgt.

2. Gleichstrommotor (10) nach Anspruch 1,
wobei das Vorspannelement (70) durch eine Feder (70) realisiert ist, die einen Hauptteil (71), der so gestaltet ist, dass er eine Vorspannkraft speichert, und einen Übertragungsteil (72) umfasst, der sich vom Hauptteil (71) aus erstreckt und so gestaltet ist, dass er die Vorspannkraft auf die Kohlebürste (30) überträgt, und wobei der Hauptteil (71) an einer Position im Gehäuse (12) außerhalb einer Linie bereitgestellt ist, die sich vom Strich der Kohlebürste (30) aus erstreckt.

3. Gleichstrommotor (10) nach Anspruch 2,
wobei die Kohlebürste (30) bereitgestellt ist, um sich auf einer Linie zu erstrecken, die die Ecke des Gehäuses (12) und die Mitte des Kollektors (26) verbindet, und
der Hauptteil (71) der Feder (70) in einem Raum zwischen der Ecke und der Seitenfläche des Gehäuses (12) bereitgestellt ist.

4. Gleichstrommotor (10) nach Anspruch 2,
wobei die Feder (70) durch eine Torsionsfeder realisiert ist und die Windung der Torsionsfeder den Hauptteil (71) bildet und nahe der Seitenfläche des Gehäuses (12) bereitgestellt ist und ein Ende der Torsionsfeder den Übertragungsteil (72) bildet und in Kontakt mit der Kohlebürste (30) steht.

5. Gleichstrommotor (10) nach Anspruch 1,
wobei das Gehäuse (12) geformt ist, um eine vieleckige Form aufzuweisen, die so viele Seitenflächen wie die Anzahl von Magnetpolen (60, 61, 62, 63) umfasst und die flachen oder gebogenen Ecken benachbarter Seitenflächen verbinden, und
der Magnet (20) so am Innenumfang des Gehäuses (12) befestigt ist, dass der zur Ecke zeigende Teil des Magneten (20) relativ dick und der zur Seitenfläche zeigende Teil davon relativ dünn ist, wobei die Mitte des gedachten Kreises, der durch den Innenumfang des Magneten (20) gebildet wird, mit der Mitte des Ankers (24) ausgerichtet ist und die Magnetpole (60, 61, 62, 63) um die dicken Abschnitte ausgebildet sind.

6. Gleichstrommotor (10) nach Anspruch 1,
wobei der Kohlehalter (31) aus Metall hergestellt ist.

7. Gleichstrommotor (10) nach Anspruch 6, ferner umfassend:
einen Detektormagneten (28), der einen Außendurchmesser gleich wie oder kleiner als der Außendurchmesser des Kollektors (26) aufweist und so an der Welle (22) befestigt ist, dass er dem Kollektor (26) benachbart ist;
einen Magnetdetektor (52), der so gestaltet ist, dass er anhand der Rotation des Detektormagneten (28) ein Impulssignal ausgibt; und
ein Verbindungselement (32), das einen Stromversorgungsanschluss (82), der mit der Verkabelung verbunden ist, die sich von der Kohlebürste (30) aus erstreckt, einen Ausgangsanschluss (84), von dem ein Signal des Magnetdetektors (52) abgerufen wird, und einen am Magnetdetektor (52) montierten und lösbar am Bürstenhalter (18) angebrachten Hauptteil umfasst, und wobei der Magnetdetektor (52) so positioniert ist das der Detektor zum Detektormagneten (28) zeigt, wenn der Hauptteil am der Bürstenhalter (18) angebracht ist.

8. Gleichstrommotor (10) nach Anspruch 1,
wobei der direkte Abstand zwischen dem Außenumfang des Kollektors (26) und der flachen Seitenflächen des Gehäuses (12) kleiner als die größte Länge der Kohlebürste (30) ist.

9. Gleichstrommotor (10) nach Anspruch 1,
wobei das Gehäuse (12) einen rechteckigen Querschnitt mit vier flachen Seitenflächen aufweist.

10. Gleichstrommotor (10) nach Anspruch 9,
wobei zwei Kohlehalter (31) bereitgestellt sind und die Kohlehalter (31) im Bürstenhalter (18) so bereitgestellt sind, dass die Axiallinie eines der Kohlehalter (31) in Bezug auf die Axiallinie des anderen einen Winkel von 90· aufweist.

11. Gleichstrommotor (10) nach Anspruch 10,
wobei zwei Drosselspulen (76) als Vorrichtungen zum Beseitigen elektrischer Störungen in einem Innenraum des Bürstenhalters (18) bereitgestellt sind und jede der beiden Drosselspulen (76) in einem Raum bereitgestellt ist, der sich in Bezug auf die Welle (22) gegenüber dem Raum befindet, in dem der entsprechende der Kohlehalter (31) bereitgestellt ist.

12. Gleichstrommotor (10) nach Anspruch 11,
wobei eine gedruckte Leiterplatte (80) mit einer Stromkreiseinheit, die mit einem darauf montierten Stromversorgungsanschluss (82) verbunden ist, im Innenraum des Bürstenhalters (18) bereitgestellt ist, und
die gedruckte Leiterplatte (80) so im Bürstenhalter (18) angebracht ist, dass die Drosselspule (76) gegenüber der Seite des Ankers (24) abgedeckt ist.

## Revendications

1. Moteur CC (10) comprenant:
un carter tubulaire (12) ayant une pluralité de surfaces latérales plates et de coins plats ou incurvés reliant les surfaces latérales adjacentes, les surfaces latérales formant une section transversale polygonale;
un aimant (20) prévu le long de la circonférence interne du carter (12) et ayant des pôles magnétiques (60, 61, 62, 63) au niveau des coins du carter (12);
un arbre (22) conçu pour être inséré dans le carter (12), le long de la ligne axiale du carter (12);
une armature (24) fixée à l'arbre (22) et prévue de manière à être face à l'aimant (20);
un commutateur (26) adapté à l'arbre (22), de manière à être coaxial par rapport à l'armature (24);
un balai (30) en carbone ayant un corps en colonne et prévu dans le carter (12), de sorte que la direction longitudinale du corps soit alignée sur la direction radiale du commutateur (26), la surface d'extrémité du balai (30) étant en contact coulissant avec la circonférence externe du commutateur (26);
un support (31) prévu dans le carter (12) et conçu pour supporter le balai (30) en carbone, de façon à ce que la course du balai (30) soit autorisée dans la direction radiale du commutateur (26); et
un élément de dérivation (70) prévu dans le carter (12) et conçu pour faire dériver le balai (30) en carbone vers le commutateur (26),
dans lequel le balai (30) en carbone est prévu de sorte que la direction longitudinale du balai (30) soit alignée sur la ligne diagonale du polygone, le carter (12) comporte un boîtier métallique (16) et un porte-balai (18) en résine reliés ensemble, l'aimant (20) étant fixé au boîtier métallique (16) et le porte-balai (18) soutenant le balai (30) en carbone et
le coin du porte-balai (18) est prévu avec un soutien en carbone tubulaire (31) conçu pour supporter le balai (30) en carbone de façon à ce que la course du balai soit autorisée dans la direction radiale du commutateur (26) et
le soutien en carbone (31) ne comprend que deux soutiens contenant un premier soutien en carbone (31) et un second soutien en carbone (31), un angle formé par une direction de la course d'un premier balai (30) en carbone supporté par le premier soutien en carbone (31) et une direction de course d'un second balai (30) en carbone supporté par le second soutien en carbone (31) étant de 90°.

2. Moteur CC (10) selon la revendication 1,
dans lequel l'élément de dérivation (70) est mis en oeuvre par un ressort (70) comprenant une partie principale (71) conçue pour retenir une force de dérivation et par une partie transmission (72) s'étendant à partir de la partie principale (71) et conçue pour transmettre la force de dérivation au balai (30) en carbone et la partie principale (71) est prévue au niveau d'une position dans le carter (12), extérieure à une ligne s'étendant à partir de la plage de course du balai (30) en carbone.

3. Moteur CC (10) selon la revendication 2,
dans lequel le balai (30) en carbone est prévu pour s'étendre sur une ligne reliant le coin du carter (12) au centre du commutateur (26) et la partie principale (71) du ressort (70) est prévue dans un espace entre le coin et la surface latérale du carter (12).

4. Moteur CC (10) selon la revendication 2,
dans lequel le ressort (70) est mis en oeuvre par un ressort à torsion et l'enroulement du ressort à torsion forme la partie principale (71) et est prévu près de la surface latérale du carter (12) et une première extrémité du ressort à torsion forme la partie de transmission (72) et est en contact avec le balai (30) en carbone.

5. Moteur CC (10) selon la revendication 1,
dans lequel le carter (12) est formé de manière à avoir une forme polygonale comprenant autant de surfaces latérales que le nombre de pôles magnétiques (60, 61, 62, 63), ainsi que des coins plats ou incurvés reliant les surfaces latérales adjacentes et
l'aimant (20) est fixé sur la circonférence interne du carter (12), de sorte que la partie de l'aimant (20) faisant face au coin soit relativement épaisse et que la partie de celui-ci qui est face à la surface latérale soit relativement fine, le centre du cercle virtuel formé par la circonférence interne de l'aimant (20) est aligné sur le centre de l'armature (24) et les pôles magnétiques (60, 61, 62, 63) sont formés autour des portions épaisses.

6. Moteur CC (10) selon la revendication 1,
dans lequel le soutien en carbone (31) est constitué de métal.

7. Moteur CC (10) selon la revendication 6, comprenant en outre:
un aimant de détecteur (28) ayant un diamètre extérieur égal ou inférieur au diamètre extérieur du commutateur (26) et fixé sur l'arbre (22) de manière à être adjacent au commutateur (26);
un détecteur magnétique (52) conçu pour produire un signal d'impulsion conforme à la rotation de l'aimant de détecteur (28); et
un connecteur (32) comprenant une borne d'alimentation en puissance (82) connectée au câblage s'étendant à partir du balai (30) en carbone, une borne de sortie (84) à partir de laquelle est récupéré un signal du détecteur magnétique (52) et une partie principale assemblée sur le détecteur magnétique (52) et fixée détachable au porte-balai (18) et le détecteur magnétique (52) étant positionné de sorte que le détecteur soit face à l'aimant de détecteur (28) lorsque la partie principale est fixée sur le porte-balai (18).

8. Moteur CC (10) selon la revendication 1,
dans lequel la distance directe entre la circonférence extérieure du commutateur (26) et la surface latérale plate du carter (12) est inférieure à la longueur maximum du balai (30) en carbone.

9. Moteur CC (10) selon la revendication 1,
dans lequel le carter (12) présente une section transversale rectangulaire ayant quatre surfaces latérales plates.

10. Moteur CC (10) selon la revendication 9,
dans lequel seuls deux soutiens en carbone (31) sont prévus et les soutiens en carbone (31) sont prévus dans le porte-balai (18) de sorte que la ligne axiale de l'un des soutiens en carbone (31) soit à un angle de 90 · par rapport à la ligne axiale de l'autre.

11. Moteur CC (10) selon la revendication 10,
dans lequel deux bobines d'arrêt (76) servant de dispositifs pour éliminer le bruit électrique sont prévues dans un espace intérieur du porte-balai (18) et chacune des deux bobines d'arrêt (76) est prévue dans un espace opposé, par rapport à l'arbre (22), à l'espace dans lequel est prévu le soutien en carbone (31) correspondant.

12. Moteur CC (10) selon la revendication 11,
une carte à circuit imprimé (80) avec un dispositif de circuit connecté à une borne d'alimentation en puissance (82) monté sur celle-ci est prévue dans l'espace intérieur du porte-balai (18) et
la carte à circuit imprimé (80) est ajustée dans le porte-balai (18) de manière à couvrir les bobines d'arrêt (76) depuis le côté armature (24).
